# EUROPEAN PATENT SPECIFICATION

(11) **EP 4 058 705 B1**
(45) Date of publication and mention of the grant of the patent: **30.10.2024**
(21) Application number: 20829330.8
(22) Date of filing: 16.11.2020
(51) Int. Cl.: F16K 31/163

(54) **ACTUATOR DEVICE FOR SHUT-OFF VALVE**
BETÄTIGUNGSVORRICHTUNG FÜR EIN ABSPERRVENTIL
DISPOSITIF ACTIONNEUR DE VANNE D'ARRÊT

(30) Priority: 14.11.2019 IT 201900021225
(43) Date of publication of application: 21.09.2022
(73) Proprietor: GALPERTI ENGINEERING AND FLOW CONTROL SPA, 23823 Colico (LC) (IT)
(72) Inventor: GALLINELLA, Fabio, 23821 Abbadia Lariana (LC). (IT); AMBROSINI, Michele, 23823 Colico (LC) (IT)
(74) Representative: Marietti, Andrea
(86) International application number: PCT/IB2020/060743
(87) International publication number: WO 2021/095020

(56) References cited:
- WO-A1-2004/090403
- GB-A- 1 001 629
- GB-A- 1 316 885
- US-A- 2 584 847
- US-B2- 7 584 692

## Description

### Field of the Invention

The present invention relates to the field of remotely controlled actuators for controlling shut-off and/or adjusting members in fluidic ducts, i.e. control valves for land, offshore and underwater installations.

### State of the prior art

The use of remotely controlled actuators for controlling shut-off members, i.e. control valves, at the service of ducts for carrying fluids in multiple industrial fields such as oil, petrochemical, manufacturing, food, etc., is known in the art.

Several actuators, belonging to the known art, have as their control component a cylinder/piston assembly with hydraulic or pneumatic actuation which, once activated, allows the piston/cylinder assembly to carry out its stroke thus creating a translatory motion that is converted, in various and different ways, to a rotary motion that is integral with the adjusting stem of the shut-off member. The dimensions and size of such actuators can vary between different configurations since the cylinder/piston assembly can be arranged in a position that is coaxial or transversal to the axis of the stem of a shut-off member, thus creating "I"- or "T"-like configurations, respectively. The so-called compact actuators are actuators with "I"-like configuration, substantially cylindrical in shape without projections or protrusions that are present instead in "T"-like configurations.

Patent document US7584692 (in the name of Petrol Valves LLC, published on 8 September 2009) depicts an actuator with compact configuration that makes the conversion of the stroke of the cylinder/piston assembly to a proportional rotation of the stem of the shut-off member through a coaxial arrangement of three cylindrically shaped hollow bodies coupled through helical threads.

This type of solution has some disadvantages.

First of all, the necessary construction complexity due to making high precision, helical, threaded shapes with significant manufacturing costs and times.

Secondly, a degree of mechanical strain which, over time, can lead to early wear of the threads and seizure of the three coaxial cylindrical bodies.

In fact, in the event of failure to operate the control cylinder, for example due to a lack of oleodynamic pressure and the need to act on the shut-off member, the independent mechanical control system, present in this device and which constitutes the emergency actuation system, must be used.

Such system produces the rotation of the outermost coaxial cylindrical hollow body in the presence of said inactive control cylinder, which is axially locked and which therefore inhibits each displacement of the coaxial cylindrical bodies in the axial direction.

The rotation of the outermost coaxial cylindrical body, through the helical threads, consequently drags with it the other two innermost coaxial cylinders.

A solution of this type is described in US patent 7,584,692.

The aforesaid integral movement of the three coaxial cylinders causes axial thrusts between the various engaged elements and, since no relative axial displacement can be made as previously specified, the integral rotation of the three coaxial cylinders will cause a mechanical strain condition on the mentioned threads with a sort of "packing" effect.

This type of mechanical strain, which is repeated over time, can be a source of micro fractures of small thread portions, resulting in material detachments and subsequent seizure of the threaded couplings.

Another device of the known art is that depicted in patent document GB1001629 (in the name of Rotork Engineering Company Ltd, published on 18 August 1965) in which the stem for actuating the plug of a fluid control valve acts with an axial translational movement, thanks to a threaded nut, and is connected, through a special shaft, to a lower "T"-like head, which in turn has two opposite pins that are perpendicular to the axis of the shaft.

The "T"-like head is inserted in a first rotatable inner cylindrical sleeve, which is in turn contained in a second fixed outer cylindrical sleeve that is integral with the valve casing.

Each pin engages, through a proximal portion thereof, with a respective first longitudinal through slit, which is parallel to the axis of the shaft and is formed in the wall of the inner sleeve and, through an end portion thereof, with a second slit, which is inclined with respect to the axis of the shaft and which is formed in the inner wall of the outer sleeve.

The first hollow cylinder is integrally connected to the stem of the valve plug, and causes this plug to be activated through its rotation.

As the actuator stem moves forward, thanks to the mechanical or fluidically assisted rotation of the threaded nut, it transmits the same axial translatory motion to the "T"-like head which, by axially translating, is rotated by the second inclined slits of the fixed outer sleeve and in turn rotates, thanks to the longitudinal slits, the rotatable inner sleeve.

As said, the rotatable inner sleeve is kinematically connected to the valve plug, so as to cause the relative closing or opening rotation of the same valve.

GB 1001629 does not describe the presence of a manually operable safety mechanism in the event of a jam in the axial movement of the stem and therefore of the "T"-like head.

Moreover, the solution described above of the patent document GB 1001629 has the problem of having a technical structure that makes it unsuitable for housing an independent actuation system of mechanical type.

Furthermore, the fact that the GB 1001629 solution requires that the "T"-like head is caused to rotate, together with the inner sleeve, by the inclined slits of the fixed outer sleeve, involves a certain complexity in the transmission of motion from the actuation stem, which please remember it is subject to an axial motion of the valve and that of the same "T"-like head, in addition to the fact that the rotation of at least two bodies constrained to each other, that is the "T"-like head and the inner sleeve, can easily lead to jams during the actuator operation.

Therefore, an object of the present invention is to solve the above-mentioned technical problems through an actuator which has a high mechanical efficiency in the transformation of the actuation motion of the various components of the device. Another object of the present invention is to make an improved high-efficiency alternative mechanical intervention system, called "override", and which can effectively complement the main actuation system.

Finally, a further object of the invention is to provide a simple embodiment with low manufacturing costs.

### Brief Description of the Invention

These and other purposes are achieved by an actuator for control valves according to claim 1.

An advantage of the invention is constituted by a high mechanical efficiency associated with the limited number of sliding components constituted only by pins acting inside the longitudinal flutes.

Another advantage of the invention is the possibility of defining the overall degree of rotation and performance of the drive torque that the actuator can operate on the plug, by varying the inclination of the helical flutes formed in the inner sleeve.

A further advantage is given by the possibility of a fine adjustment of the position of the pins in the helical flutes of the inner sleeve in order to guarantee a uniform contact between each pin and the respective flute and a torque equally distributed between the pins.

Furthermore, such invention minimises the possibility of jams during its actuation. The present invention is particularly applicable to oil and petrochemical control valves in offshore and underwater installations.

Further characteristics of the invention can be deduced from the dependent claims.

### Brief Description of the Figures

Further characteristics and advantages of the invention will become clear from reading the following description provided by way of non-limiting example, with the aid of the figures depicted in the accompanying drawings, wherein:
- **figure 1** depicts a side view of the actuator according to an embodiment of the invention, with a partial section of the alternatively operating mechanical device;
- **figure 2** depicts a cross section of the actuator according to the B-B line denoted in figure 1;
- **figure 3** depicts a cross section of an alternatively operating mechanical device, according to an embodiment of the invention, taken along the A-A line denoted in figure 1; and
- **figure 4** depicts a view of an enlarged detail of the cross section of figure 2.

### Detailed Description of the Figures

The present invention will now be described with particular reference to the accompanying figures.

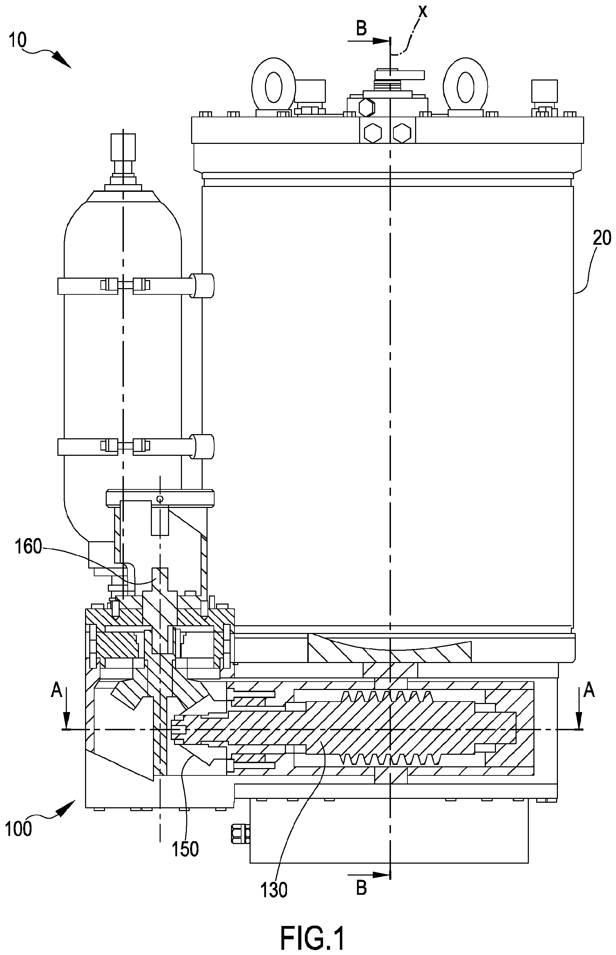

In particular, figure 1 depicts an actuator according to an embodiment of the invention, denoted by the reference numeral 10 as a whole, said actuator 10 comprising at least one fluidic actuation - constituted by a device known per se - contained inside a casing 20, where the aforesaid actuator 10 is configured to operate on a plug of a control valve.

From this figure, the compact construction of the substantially cylindrical actuator can be observed.

It can also be observed that the actuator 10 further comprises an alternatively operating emergency mechanical device 100, which will be better described in greater detail below, positioned at the base of the actuator 10 with an input shaft 160 of the mechanical device 100 that is easily accessible for its actuation from the outside through a suitable tool.

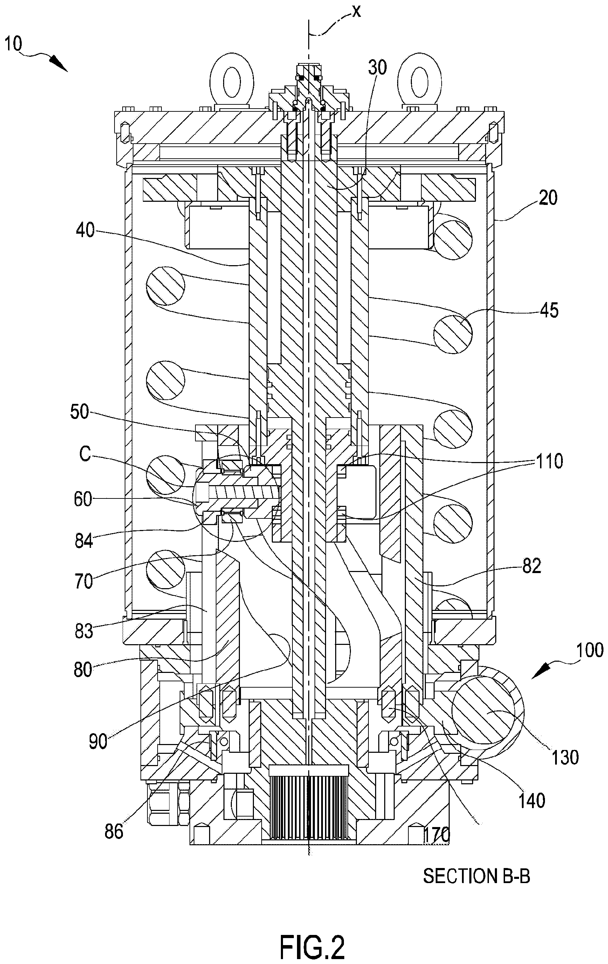

Figure 2 shows the inside of the casing 20 and its main components, according to a cross section of the actuator 10 taken along the B-B line denoted in figure 1.

In particular, it is visible that inside the casing 20 having a longitudinal axis X, there is a cylinder 40 which, as a result of a fluidic actuation according to modes known per se that include remote control, can axially slide inside the aforesaid casing 20.

The axial sliding of the cylinder 40, along a piston 30, compresses a spring 45, while keeping the position of the piston 30 unchanged.

A single-acting fluidic actuator with return spring has been described herein. Alternatively, as it will be known to those skilled in the art, it is possible to use any other known fluidic actuator such as, for example, a dual-chamber jack.

As it can be seen from figure 2, said cylinder 40 has a support 50 for at least one pin 60, where each of the aforesaid pins 60 acts on an inner sleeve 80 through corresponding helical flutes 90 formed in the same inner sleeve 80.

The pins 60 may preferably be three in number.

Axial sliding involves the action of each pin 60, through a suitable roller 70, on the respective helical flute 90 so as to rotate the inner sleeve 80 around the longitudinal axis of said casing 20, since the outer sleeve 82 does not rotate and constrains the aforesaid pins 60 to an axial translation thanks to the action of the three sliding blocks 84, which are also mounted on the pins 60 and coaxial with the rollers 70, which act on axial flutes 83 formed in the outer sleeve 82.

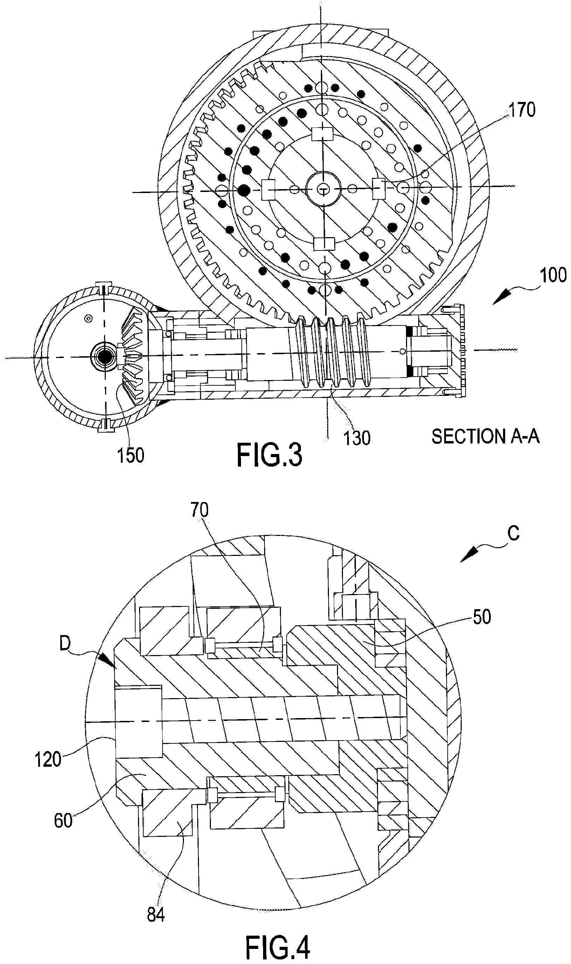

In fact, as shown in figure 2 and figure 3, the outer sleeve 82 is connected, for example through dowels 170 or other known connecting elements, integrally to the crown 140 in turn coupled to a worm screw 130.

De facto this worm screw 130, which ensures rotational irreversibility, forces the outer sleeve 82 to remain in position despite the rotational torque transmitted by the system of rollers 70 and sliding blocks 84, thus guiding the movement in the longitudinal direction of the sliding blocks 84 and of the rollers 70 and achieving the consequent rotation of the inner sleeve 80.

Finally, the rotation of the aforesaid inner sleeve 80 integrally connected to the plug, causes the plug of the control valve to rotate.

In the absence of pressure in the cylinder 40, the spring 45 can extend again, thus returning the cylinder 40 of the aforesaid actuator 10, as well as the plug, to the initial position.

In place of the actuation described above, carried out by the actuator 10, it is possible to perform an intervention from the outside, for example in the case of no pressure on the cylinder 40 or for other reasons, with said cylinder 40 in its initial position and the aforesaid spring 45 in extended configuration, through the alternatively operating mechanical device 100 which acts by rotating the aforesaid outer sleeve 82.

As shown in figure 1 and in figure 3, the aforesaid alternatively operating mechanical device 100 comprises a bevel gear pair 150 or other gear systems (such as for example epicyclic gears or gears with parallel axes) configured to transmit a rotational motion coming from the input shaft 160 of the aforesaid mechanical device 100 to a worm screw 130.

In particular, by acting on the input shaft 160, for example through a dedicated tool, the bevel gear pair 150 rotates the worm screw 130 which in turn actuates the rotation of the crown 140, which consequently causes the outer sleeve 82 integral therewith to rotate.

The rotation of the outer sleeve 82 rotates the sliding blocks 84 engaged in the longitudinal flutes and consequently the rollers 70 which, by acting on the helical flutes of the inner sleeve 80, transmit the rotation to the inner sleeve 80 integrally connected to the plug, a movement that consequently causes the valve plug to rotate.

It should be specified that the rotation of the entire outer sleeve 82/inner sleeve 80 assembly is made possible by the presence of bearings 110 mounted between the cylinder 40 and the seats 50 of the pins 60, so as to prevent the transmission of the rotary motion to the cylinder 40.

It should be noted that some embodiments provide for other gear systems, in place of the bevel gear pair 150, such as for example epicyclic gears or gears with parallel axes depending on the sizing requirements of the mechanical device 160 and to the desired reduction ratio between the number of revolutions of the input shaft 160 and the degree of rotation of the valve plug.

Finally, in the detail of figure 4, a support pin 60 is shown.

The support pin 60 is configured to ensure the fine adjustment of the respective rollers 70 on the respective helical flutes 90 present in the inner sleeve 80.

Said pin 60 can have an eccentric outer portion to allow the position of said pin 60 to be adjusted radially.

Other known means for adjusting the respective rollers 70 on the respective helical flutes 90 can be alternatively used.

In the operation of the actuator 10, as a result of a fluidic actuation according to modes known per se, the cylinder 40 slides axially inside the casing 20.

The axial sliding of the cylinder 40, along the piston 30, compresses the spring 45, while keeping the position of the piston 30 unchanged.

Such axial sliding of cylinder 40 involves the action of each pin 60 through the respective roller 70, on the respective helical flute 90 so as to rotate the inner sleeve 80 around the longitudinal axis X, with the outer sleeve 82 which does not rotate, thus remaining in a fixed position by virtue of its coupling with the mechanical device 100. Said outer sleeve 82, during the rotation of the inner sleeve 80, constrains the pins 60 to an axial translation thanks to the action of the sliding blocks 84 mounted on the pins and coaxial with the rollers 70, which act on the axial flutes 83 formed in the outer sleeve 82.

The rotation of the inner sleeve 80, integrally connected to the plug, consequently rotates the valve plug.

In the absence of pressure in the cylinder 40, the spring 45 extends again, thus returning the cylinder 40 to the initial position as well as the valve plug.

In case of need and/or emergency situation, with the cylinder 40 in its initial position and the spring 45 in extended configuration, it is possible to carry out an operation from the outside through the alternatively operating emergency mechanical device 100.

Operating the mechanical device 100 requires acting on the input shaft 160, the rotation of which moves the bevel gear pair 150 which, in turn, rotates the worm screw 130.

Such worm screw 130 operates the rotation of the crown 140, which consequently rotates the outer sleeve 82.

Such outer sleeve 82 rotates the sliding blocks 84 engaged in the longitudinal flutes and consequently the rollers 70 which, by acting on the helical flutes of the inner sleeve 80, transmit the rotation to the inner sleeve 80.

The assembly of the sliding blocks and rollers is constrained to maintain the longitudinal position thanks to the reactive action of the spring 45, which keeps the cylinder 40 and all the elements integral therewith during the whole manoeuvre through the mechanical device 100.

It should be observed that alternative means with elastic behaviour for retaining the cylinder 40 and the respective elements integral therewith during the actuation of the mechanical device 100, can be used peacefully without departing from the protection scope required herein.

The inner sleeve 80 is integrally connected to the plug, which consequently causes the valve plug to rotate.

Obviously, modifications or improvements that are dictated by contingent or particular reasons, without thereby departing from the scope of the invention as defined by the claims, may be made to the invention as described herein.

## Claims

1. Actuator (10) for a control valve, where a plug of said actuator (10) can be operated by fluidic actuation and alternatively by an operating mechanical device (100), wherein said actuator (10) comprises a case (20) having a longitudinal axis, a cylinder (40), an inner sleeve (80) and an outer sleeve (82), wherein inside said case (20) there is said cylinder (40), which, as a result of the fluidic actuation, can axially slide inside said case (20), wherein said cylinder (40) has at least one support (50) for a pin (60), wherein each of said pins (60) can act on said inner sleeve (80) by means of corresponding helical flutes (90) formed in the inner sleeve (80) in order to rotate said inner sleeve (80) around the longitudinal axis of said case (20), while said outer sleeve (82) constrains said pins (60) to an axial translation and wherein the rotation of said inner sleeve (80) acts on the plug of the valve, **characterized in that** said alternatively operating mechanical device (100) can act by rotating said outer sleeve (82) in such a way that said pins (60) act on said helical flutes (90) of the inner sleeve (80) by rotating said inner sleeve (80), which acts on the movement of the plug.

2. Actuator (10) according to claim 1, wherein said alternatively operating mechanical device (100) comprises a worm screw (130) configured to act on a crown wheel (140), wherein said crown wheel (140) is constrained to said outer sleeve (82).

3. Actuator (10) according to claim 2, wherein said alternatively operating mechanical device (100) comprises a bevel gear pair (150) or other gearing systems configured to transmit a rotational motion coming from an input shaft (160) of said mechanical device (100) to said worm screw (130).

4. Actuator (10) according to claim 1, wherein each of said pins (60) is coupled to a roller (70) which can slide inside a corresponding helical flute (90) obtained said inner sleeve (80).

5. Actuator (10) according to claim 4, wherein every one of said rollers (70), each one belonging to a respective pin (60), provides adjusting means (120) configured to ensure the fine adjustment of the position of the rollers (70) on the respective helical flutes (90).

6. Actuator (10) according to claim 1, wherein the outer sleeve (82) constrains said pins (60) to an axial translation by acting on corresponding sliding blocks (84), each mounted on a respective pin (60).

7. Actuator (10) according to claim 1, wherein a spring (45) configured to oppose the axial sliding of said cylinder (40) is provided.

8. Actuator (10) according to claim 7, wherein during the operation of the mechanical device (100), the cylinder (40) remains in position keeping said spring (45) in extended configuration.

9. Actuator (10) according to claim 8, wherein there are bearings (110) mounted between the cylinder (40) and the seats (50) of the pins (60).

## Patentansprüche

1. Aktuator (10) für ein Steuerventil, wobei ein Stopfen des Aktuators (10) durch eine Fluidbetätigung oder alternativ durch eine arbeitende mechanische Vorrichtung (100) betätigt werden kann, wobei der Aktuator (10) ein Gehäuse (20) mit einer Längsachse, einen Zylinder (40), eine innere Hülse (80) und eine äußere Hülse (82) aufweist, wobei sich innerhalb des Gehäuses (20) der Zylinder (40) befindet, der infolge der Fluidbetätigung axial innerhalb des Gehäuses (20) gleiten kann, wobei der Zylinder (40) mindestens eine Halterung (50) für einen Stift (60) aufweist, wobei jeder der Stifte (60) mittels entsprechender spiralförmiger Nuten (90), die in der inneren Hülse (80) ausgebildet sind, auf eine innere Hülse (80) einwirken kann, um die innere Hülse (80) um die Längsachse des Gehäuses (20) zu drehen, während die äußere Hülse (82) die Stifte (60) auf eine axiale Translation beschränkt, und wobei die Drehung der inneren Hülse (80) auf den Ventilkegel einwirkt, **dadurch gekennzeichnet, dass** die alternativ arbeitende mechanische Vorrichtung (100) durch Drehen der äußeren Hülse (82) derart einwirken kann, dass die Stifte (60) auf die Längsrillen (90) der inneren Hülse (80) einwirken, indem die innere Hülse (80) gedreht wird, was auf die Bewegung des Kegels einwirkt.

2. Aktuator (10) nach Anspruch 1, wobei die alternativ arbeitende mechanische Vorrichtung (100) eine Schneckenschraube (130) aufweist, die so konfiguriert ist, dass sie auf ein Kronenrad (140) einwirkt, wobei das Kronenrad (140) an die äußere Hülse (82) gezwungen ist.

3. Aktuator (10) nach Anspruch 2, wobei die alternativ arbeitende mechanische Vorrichtung (100) ein Kegelradpaar (150) oder andere Getriebesysteme aufweist, die dazu konfiguriert sind, eine von einer Eingangswelle (160) der mechanischen Vorrichtung (100) kommende Drehbewegung auf die oben genannte Schneckenschraube (130) zu übertragen.

4. Aktuator (10) nach Anspruch 1, wobei jeder der Stifte (60) mit einer Rolle (70) gekoppelt ist, die innerhalb einer entsprechenden spiralförmigen Nut (90) in der inneren Hülse (80) gleiten kann.

5. Aktuator (10) nach Anspruch 4, wobei jede der vorgenannten Rollen (70), die jeweils zu einem entsprechenden Stift (60) gehören, über Einstellmittel (120) verfügt, die dazu ausgelegt sind, die Feineinstellung der Position der Rollen (70) auf den entsprechenden spiralförmigen Nuten (90) sicherzustellen.

6. Aktuator (10) nach Anspruch 1, wobei die äußere Hülse (82) die Stifte (60) zu einer axialen Verschiebung zwingt, indem sie auf entsprechende Gleitblöcke (84) einwirkt, die jeweils auf einem jeweiligen Stift (60) montiert sind.

7. Aktuator (10) nach Anspruch 1, wobei eine Feder (45) vorgesehen ist, die so konfiguriert ist, dass sie der axialen Verschiebung des Zylinders (40) entgegenwirkt.

8. Aktuator (10) nach Anspruch 7, wobei während des Betriebs der mechanischen Vorrichtung (100) der Zylinder (40) in seiner Position bleibt und die Feder (45) in ihrer ausgefahrenen Konfiguration hält.

9. Aktuator (10) nach Anspruch 8, wobei zwischen dem Zylinder (40) und den Sitzen (50) der Stifte (60) Lager (110) montiert sind.

## Revendications

1. Actionneur (10) pour une vanne de commande, où un bouchon dudit actionneur (10) peut être actionné par un actionnement fluidique et par un dispositif mécanique fonctionnant de façon alternative (100), dans lequel ledit actionneur (10) comprend un boîtier (20) ayant un axe longitudinal, un cylindre (40), un manchon intérieur (80) et un manchon extérieur (82), dans lequel à l'intérieur dudit boîtier (20) se trouve ledit cylindre (40) qui, suite à l'actionnement fluidique, peut glisser axialement à l'intérieur dudit boîtier (20), dans lequel ledit cylindre (40) a au moins un support (50) pour une broche (60), dans lequel chacune desdites broches (60) peut agir sur ledit manchon intérieur (80) au moyen de cannelures hélicoïdales correspondantes (90) formées dans le manchon intérieur (80) afin de faire tourner ledit manchon intérieur (80) autour de l'axe longitudinal dudit boîtier (20), tandis que ledit manchon extérieur (82) contraint lesdites broches (60) à une translation axiale et dans lequel la rotation dudit manchon intérieur (80) agit sur le bouchon de la vanne, **caractérisé en ce que** ledit dispositif mécanique fonctionnant de façon alternative (100) peut agir en faisant tourner ledit manchon extérieur (82) de manière à ce que lesdites broches (60) agissent sur lesdites cannelures hélicoïdales (90) du manchon intérieur (80) en faisant tourner ledit manchon intérieur (80), ce qui agit sur le mouvement du bouchon.

2. Actionneur (10) selon la revendication 1, dans lequel ledit dispositif mécanique fonctionnant de façon alternative (100) comprend une vis sans fin (130) configurée pour agir sur une couronne dentée (140), dans lequel ladite couronne dentée (140) est contrainte audit manchon extérieur (82).

3. Actionneur (10) selon la revendication 2, dans lequel ledit dispositif mécanique fonctionnant de façon alternative (100) comprend une paire d'engrenages coniques (150) ou d'autres systèmes d'engrenage configurés pour transmettre un mouvement de rotation provenant d'un arbre d'entrée (160) dudit dispositif mécanique (100) à ladite vis sans fin (130).

4. Actionneur (10) selon la revendication 1, dans lequel chacune desdites broches (60) est couplée à un galet (70) qui peut glisser à l'intérieur d'une cannelure hélicoïdale correspondante (90) obtenue par ledit manchon intérieur (80).

5. Actionneur (10) selon la revendication 4, dans lequel chacun desdits galets (70), appartenant chacun à une broche (60) respective, fournit des moyens de réglage (120) configurés pour assurer le réglage fin de la position des galets (70) sur les cannelures hélicoïdales (90) respectives.

6. Actionneur (10) selon la revendication 1, dans lequel le manchon extérieur (82) contraint lesdites broches (60) à une translation axiale en agissant sur des blocs coulissants correspondants (84), chacun monté sur une broche respective (60).

7. Actionneur (10) selon la revendication 1, dans lequel un ressort (45) configuré pour s'opposer au glissement axial dudit cylindre (40) est prévu.

8. Actionneur (10) selon la revendication 7, dans lequel, pendant le fonctionnement du dispositif mécanique (100), le cylindre (40) reste en position en maintenant ledit ressort (45) en configuration étendue.

9. Actionneur (10) selon la revendication 8, dans lequel des paliers (110) sont montés entre le cylindre (40) et les sièges (50) des broches (60).
